# DEMANDE DE BREVET EUROPEEN

(11) **EP 4 362 394 A1**
(43) Date de publication de la demande: **01.05.2024**
(21) Numéro de dépôt: 23203147.6
(22) Date de dépôt: 12.10.2023
(51) Int. Cl.: H04L 9/40, H04W 12/00, H04W 12/041, H04W 12/069, H04W 12/108, H04W 12/48, H04W 12/30, H04W 12/40

(54) **ELÉMENT SÉCURISÉ, TERMINAL HÔTE ASSOCIÉ, PROCÉDÉ DE GÉNÉRATION DE CERTIFICAT DANS UN ÉLÉMENT SÉCURISÉ ET PROGRAMME D ORDINATEUR ASSOCIÉ**

(30) Priorité: 26.10.2022 FR 2211166
(71) Demandeur: IDEMIA France, 92400 Courbevoie (FR)
(72) Inventeur: WOZNIAK, Tomasz, 92400 Courbevoie (FR); PERRIN, Jean-Philippe, 92400 Courbevoie (FR)
(74) Mandataire: Idemia

(57) **Abrégé**

L'invention concerne un élément sécurisé (15) comprenant un premier moyen de mémorisation (22, 24, 26) d'un premier certificat associé à une application primaire et un processeur (20). Selon l'invention, l'application primaire est conçue de sorte que le processeur (20) génère un second certificat associé à une application secondaire lorsque l'application primaire est exécutée par le processeur (20), le second certificat étant signé électroniquement au moyen d'une clé contenue dans le premier certificat.

L'invention concerne également un terminal hôte (1), un procédé de génération d'un certificat dans un élément sécurisé (15) et un programme d'ordinateur associé.

## Description

### Domaine technique

La présente invention concerne de manière générale le domaine de la génération de certificats pour des composants électroniques.

Elle concerne plus particulièrement un élément sécurisé, un terminal hôte associé, un procédé de génération de certificat dans un tel élément sécurisé et un programme d'ordinateur associé.

### Technique antérieure

Les systèmes d'exploitation de certains composants électroniques peuvent aujourd'hui être authentifiés à partir de certificats générés en usine lors de la fabrication de ces composants.

Ces certificats sont générés de manière unique pour chaque composant électronique. Ainsi, une grande diversité et/ou un nombre élevé de composants électroniques impose une aussi grande diversité et/ou un aussi grand nombre de certificats générés. Cependant, cette diversification et/ou de nombre élevé de composants rendent le processus de fabrication peu flexible et particulièrement coûteux, notamment en termes de temps.

### Exposé de l'invention

Afin de remédier à l'inconvénient précité de l'état de la technique, la présente invention propose un élément sécurisé permettant d'améliorer la génération de certificats.

Plus particulièrement, on propose selon l'invention un élément sécurisé comprenant un premier moyen de mémorisation d'un premier certificat associé à une application primaire et un processeur. Selon l'invention, l'application primaire est conçue de sorte que le processeur génère un second certificat associé à une application secondaire lorsque l'application primaire est exécutée par le processeur, le second certificat étant signé électroniquement au moyen d'une clé contenue dans le premier certificat.

Ainsi, grâce à l'invention, un certificat source permet de générer, pour un système d'exploitation particulier de type applicatif embarqué dans un élément sécurisé, un certificat dérivé directement dans l'élément sécurisé. L'étape de personnalisation de l'élément sécurisé est plus rapide (donc moins coûteuse) puisque la génération des différents certificats n'a plus d'obligation à être effectuée en usine lors de la fabrication ou de la personnalisation de l'élément sécurisé.

D'autres caractéristiques non limitatives et avantageuses de l'élément sécurisé conforme à l'invention, prises individuellement ou selon toutes les combinaisons techniquement possibles, sont les suivantes :
- l'application primaire est conçue pour recevoir une requête de l'application secondaire, le second certificat étant généré sur la base de la réception de ladite requête ;
- le premier certificat est mémorisé dans une première partie de mémoire ;
- le premier moyen de mémorisation comprend au moins une première mémoire physique, la première partie de mémoire correspondant à une portion de la première mémoire physique ;
- l'application primaire est conçue de sorte que le processeur commande la mémorisation du second certificat dans une deuxième partie de mémoire lorsque l'application primaire est exécutée par le processeur, la deuxième partie de mémoire étant distincte de la première partie de mémoire ;
- l'application secondaire est conçue pour recevoir une autre requête de l'application primaire, la réception de cette autre requête commandant la mémorisation du second certificat ;
- il est prévu un deuxième moyen de mémorisation de l'application primaire et de l'application secondaire ;
- le deuxième moyen de mémorisation comprend au moins une deuxième mémoire physique, la deuxième partie de mémoire étant une portion de la deuxième mémoire physique ;
- la première partie de mémoire est une partie d'une mémoire programmable une seule fois ;
- le deuxième moyen de mémorisation est positionné en dehors de l'élément sécurisé ;
- l'application primaire est conçue de sorte que le processeur applique, au second certificat, un algorithme cryptographique de signature électronique utilisant la clé contenue dans le premier certificat ; et
- l'application secondaire est une application d'authentification dans un réseau de téléphonie mobile.

L'invention concerne également un terminal hôte comprenant un dispositif électronique muni d'un élément sécurisé tel qu'introduit précédemment. Le terminal hôte comprend un deuxième moyen de mémorisation de l'application primaire et de l'application secondaire. Le deuxième moyen de mémorisation est relié à l'élément sécurisé.

L'invention concerne également un procédé de génération de certificat dans un élément sécurisé, ledit élément sécurisé comprenant un premier moyen de mémorisation d'un premier certificat associé à une application primaire et un processeur, ledit procédé comprenant une étape de génération par le processeur d'un second certificat associé à une application secondaire lorsque l'application primaire est exécutée par le processeur, le second certificat étant signé électroniquement au moyen d'une clé contenue dans le premier certificat.

D'autres caractéristiques non limitatives et avantageuses du procédé de génération de certificat dans un élément sécurisé conforme à l'invention, prises individuellement ou selon toutes les combinaisons techniquement possibles, sont les suivantes :
- il est également prévu une étape de réception par l'application primaire d'une requête de l'application secondaire, ladite étape de génération du second certificat étant basée sur la réception de ladite requête ;
- le premier moyen de mémorisation comprend au moins une première partie de mémoire et il est prévu un deuxième moyen de mémorisation comprenant une deuxième partie de mémoire, la première partie de mémoire mémorisant le premier certificat et le procédé comprenant une étape de mémorisation du second certificat dans la deuxième partie de mémoire ;
- le premier moyen de mémorisation comprend au moins une première mémoire physique et le deuxième moyen de mémorisation comprend une deuxième mémoire physique, la première partie de mémoire correspondant à une portion de la première mémoire physique et la deuxième partie de mémoire correspondant à une portion de la deuxième mémoire physique ; et
- l'étape de génération comprend une étape d'application, au second certificat, d'un algorithme cryptographique de signature électronique utilisant la clé contenue dans le premier certificat.

L'invention concerne aussi un programme d'ordinateur comprenant des instructions exécutables par un processeur conçues pour mettre en oeuvre un procédé de génération de certificat tel qu'introduit précédemment lorsque ces instructions sont exécutées par le processeur.

Ce programme d'ordinateur, mémorisé par exemple sur un support d'enregistrement, est susceptible d'être mis en oeuvre dans un élément sécurisé tel qu'une carte SIM (pour « *Subscriber Identity Module* ») ou un module eUICC, (pour « *embedded Universal Identity Circuit Card* »), ou dans un système sur composant (ou SOC pour « *System On Chip* ») comprenant des instructions de programme pour la mise en oeuvre du procédé de génération de certificat ci-dessus, lorsque les instructions de programme sont exécutées par un processeur ou plus généralement dans un ordinateur.

Ce programme peut utiliser n'importe quel langage de programmation (par exemple, un langage objet ou autre), et être sous la forme de code source, code objet, ou de code intermédiaire entre code source et code objet, tel que dans une forme partiellement compilée, ou dans n'importe quelle autre forme souhaitable.

L'invention concerne également un support d'enregistrement non transitoire lisible par un ordinateur sur lequel est enregistré un programme d'ordinateur comportant des instructions pour la mise en oeuvre du procédé ci-dessus, lorsque ce programme est exécuté par un processeur.

Le support d'informations peut être n'importe quelle entité ou dispositif capable de stocker le programme. Par exemple, le support peut comprendre un moyen de stockage, tel qu'une ROM (pour « *Read Only Memory* »), par exemple une ROM de circuit microélectronique ou une mémoire Flash par exemple, ou encore un moyen d'enregistrement magnétique, par exemple une disquette (floppy dise) ou un disque dur.

La description qui va suivre en regard des dessins annexés, donnés à titre d'exemples non limitatifs, fera bien comprendre en quoi consiste l'invention, comment elle peut être réalisée et fera apparaitre d'autres particularités et avantages de l'invention.

### Brève description des dessins

La figure 1 représente schématiquement les éléments principaux d'un terminal hôte comprenant un dispositif électronique embarqué au sein duquel est mise en oeuvre l'invention, et
La figure 2 représente, sous forme de logigramme, un exemple de procédé conforme à l'invention.

### Description détaillée

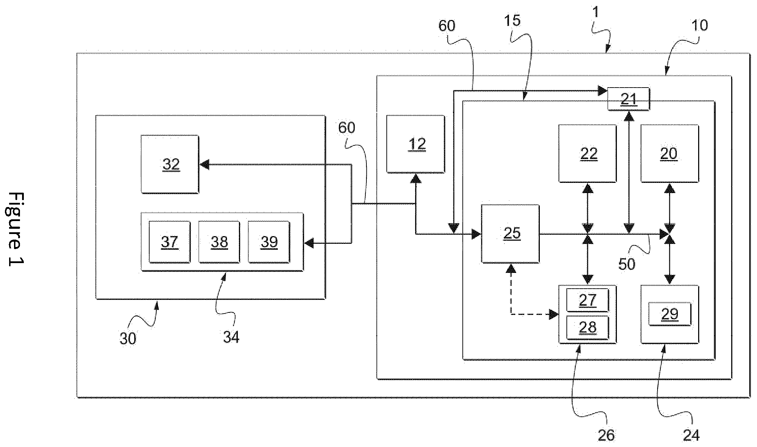

La figure 1 représente schématiquement les éléments principaux d'un terminal hôte 1 comprenant un dispositif électronique 10 embarqué au sein duquel est mise en oeuvre l'invention.

Ce terminal hôte 1 est par exemple ici un téléphone intelligent (ou « smartphone » selon l'appellation d'origine anglo-saxonne couramment utilisée). En variante, le terminal hôte peut par exemple être un terminal de communication, un passeport électronique, ou un ordinateur. Comme le montre la figure 1, le terminal hôte 1 comprend le dispositif électronique 10 et des moyens de mémorisation 30 (également appelés « deuxième moyen de mémorisation 30 » dans la suite).

Le dispositif électronique 10 représente un exemple d'architecture d'un système sur puce (aussi appelé SOC pour « *System On Chip* » selon l'acronyme d'origine anglo-saxonne). Comme le montre la figure 1, le dispositif électronique 10 comprend ici un premier processeur 12 (par exemple un microprocesseur ou unité de traitement) et un élément sécurisé 15. De manière classique, un ensemble formé d'un dispositif électronique (SOC) intégrant ou embarquant un élément sécurisé correspond à une carte à microcircuit, par exemple une carte à circuit intégré universelle (ou iUICC pour "*integrated Universal Integrated Circuit Card*") ou une carte iSIM (pour « *Integrated Subscriber Identity Module* »).

Le dispositif électronique 10 est configuré pour être relié au deuxième moyen de mémorisation 30 externe par l'intermédiaire d'une connexion mise en oeuvre par un bus de communication 60. Dans la présente description, les termes « lié » ou « relié » utilisés sont à comprendre au sens « connecté », de façon locale, tel que, typiquement mis en oeuvre par un bus, par opposition, par exemple, à une connexion à distance avec un serveur.

Le premier processeur 12 du dispositif électronique 10 et l'élément sécurisé 15 (par l'intermédiaire d'un deuxième processeur 20 décrit ci-après) communiquent par exemple au moyen d'une interface de communication 21. Cette interface de communication 21 comprend par exemple un module d'accès direct à la mémoire (ou DMA pour « *Direct Memory Access* ») ou un module de type « Mailbox ». La mise en oeuvre de la connexion du premier processeur 12 à l'interface de communication 21 est assurée par le bus de communication 60.

D'autres éléments, non représentés sur la figure 1 par soucis de clarté, peuvent être compris dans le dispositif électronique 10 et faire partie de son architecture, tel que, par exemple, un processeur graphique (ou GPU, pour « *Graphical Process Unit* »), un contrôleur mémoire, un composant d'accès mémoire directe (ou DMA), un modem, etc.

De manière générale, tel que cela est défini par l'organisme de normalisation technique GlobalPlatform, un élément sécurisé est une unité de traitement basée sur une plateforme logicielle et matérielle configurée pour permettre l'hébergement sécurisé, par exemple, de données (clés cryptographiques, algorithmes, fonctions cryptographiques, ...) et d'applications. Il est configuré pour coopérer de façon sécurisée avec un dispositif hôte (ici le dispositif électronique 10), dans lequel il est intégré ou embarqué et fournit également un environnement d'exécution sécurisé aux applications
L'élément sécurisé 15 (ou SE pour *"Secure Element*") est par exemple un microcontrôleur sécurisé d'un dispositif électronique portatif (ou *"hand-held electronic device"* selon l'appellation anglo-saxonne couramment utilisée). Il peut prendre diverses formes, telles qu'un élément sécurisé embarqué (ou « embedded Secure Element »), qu'un module UICC (pour « *Universal Integrated Circuit Card* ») ou qu'un module SIM (pour « *Subscriber Identity Module* »), ou encore « eSIM » (pour *embedded SIM*) ou « eUICC » (pour *embedded UICC*) en tant qu'élément discret ou intégré.

L'élément sécurisé 15 comprend le deuxième processeur 20 (ici un microprocesseur ou unité de traitement), un premier moyen de mémorisation 22, 24, 26, une interface de sécurisation 25 et l'interface de communication 21 introduite précédemment. Les différents éléments compris dans l'élément sécurisé 15 sont reliés entre eux par un bus de communication 50.

Le deuxième processeur 20 (ou deuxième unité de traitement) met en oeuvre un système d'exploitation (ou OS pour « Operating System ») sécurisé.

Le deuxième processeur 20 est configuré pour envoyer des instructions au premier processeur 12, par exemple, par l'intermédiaire de l'interface de communication 21. Le deuxième processeur 20 est aussi configuré pour envoyer des instructions à l'interface de sécurisation 25, par exemple pour commander une lecture ou écriture de données dans le deuxième moyen de mémorisation 30.

Le premier moyen de mémorisation comprend au moins une mémoire physique. Plus particulièrement ici, le premier moyen de mémorisation comprend une mémoire vive 22 ou mémoire volatile ou mémoire cache (par exemple de type RAM pour « *Random Access Memory* » ou bien plus spécifiquement de type SRAM pour « *Static Random Access Memory* »), une mémoire morte 24 ou mémoire non volatile (par exemple de type ROM pour « *Read-Only Memory* » ou de type EEPROM pour « *Electrically Erasable Programmable Read Only Memory* ») et une mémoire morte ou non volatile programmable 26 (par exemple de type OTP pour « *One Time Programmable* »). La mémoire vive 22, la mémoire morte 24 et la mémoire morte programmable 26 sont chacune liées au deuxième processeur 20, par l'intermédiaire du bus de communication 50 (figure 1) de sorte que le deuxième processeur 20 de l'élément sécurisé 15 peut lire ou écrire des données dans chacune de ces mémoires.

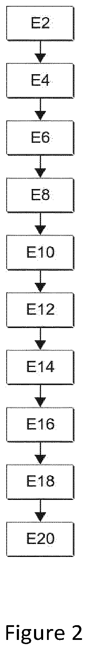

Une de ces mémoires, par exemple la mémoire vive 22, mémorise des instructions de programme d'ordinateur qui permettent en particulier la mise en oeuvre d'un procédé décrit ci-dessous en référence à la figure 2 lorsque ces instructions sont exécutées par le deuxième processeur 20. La mémoire vive 22 comprend des registres adaptés à l'enregistrement de variables et paramètres créés et modifiés au cours de l'exécution du programme d'ordinateur. Les instructions du programme, par exemple stockées en mémoire non volatile 24 ou dans le deuxième moyen de mémorisation, sont chargées en mémoire vive 22 en vue d'être exécutées par le deuxième processeur 20.

La mémoire morte programmable 26 comprend ici une première portion de mémoire 27 et une deuxième portion de mémoire 28.

L'interface de sécurisation 25 est conçue pour permettre l'échange des données entre le dispositif électronique 10, l'élément sécurisé 15 et le terminal hôte 1 (par exemple par l'intermédiaire du deuxième moyen de mémorisation 30). L'interface de sécurisation 25 est adaptée à transmettre et à recevoir des données, par exemple avec le deuxième moyen de mémorisation 30. Comme mentionné précédemment, l'interface de sécurisation 25 est par exemple ici conçue pour chiffrer et/ou déchiffrer les données échangées entre l'élément sécurisé 15 et le deuxième moyen de mémorisation 30 (ici situé dans le terminal hôte 1). Pour cela, des clés de chiffrement et/ou de déchiffrement sont par exemple mémorisées dans la mémoire morte programmable 26, plus particulièrement ici dans la deuxième portion de mémoire 28 de la mémoire morte programmable 26.

L'interface de sécurisation 25 comprend un module d'accès mémoire (non représenté) comportant, par exemple, un composant d'accès mémoire directe (DMA) permettant la lecture ou écriture dans des registres de mémoire du deuxième moyen de mémorisation 30.

L'interface de sécurisation 25 comprend également un module de cryptographie (non représenté) comprenant un composant réalisant des opérations de chiffrement ou déchiffrement de données (ou « *crypto engine* » selon l'appellation d'origine anglo-saxonne) ainsi qu'un composant interne de mémorisation propre à lui (non représenté). Lors du démarrage (ou « boot » selon l'appellation d'origine anglo-saxonne) de l'élément sécurisé 15, les clés de chiffrement et/ou de déchiffrement sont copiées, depuis la deuxième portion de mémoire 28 où elles sont mémorisées, dans un registre mémoire (non représenté sur la figure 1) de l'interface de sécurisation 25.

En variante, l'interface de sécurisation 25 peut être reliée directement, par exemple au moyen d'un bus de communication comme cela est représenté en pointillés sur la figure 1, à la mémoire morte programmable pour accéder aux clés de chiffrement et/ou de déchiffrement mémorisées dans la deuxième portion de mémoire 28 de la mémoire morte programmable 26.

L'interface de communication 21 est conçue pour permettre l'échange de données avec des éléments qui se trouvent à l'extérieur de l'élément sécurisé 15. Par exemple, elle est conçue pour transmettre et recevoir des données échangées entre le premier processeur 12 du dispositif électronique 10 et le deuxième processeur 20 de l'élément sécurisé 15.

Comme cela est représenté sur la figure 1, le terminal hôte 1 (par exemple un téléphone intelligent) comprend le deuxième moyen de mémorisation 30.

Le deuxième moyen de mémorisation 30 comprend au moins une mémoire physique. Plus particulièrement ici, le deuxième moyen de mémorisation comprend une mémoire vive 32 (par exemple de type RAM pour « *Random Access Memory* » ou bien plus spécifiquement DRAM pour « *Dynamic Random Access Memory* ») et une mémoire non-volatile réinscriptible 34 (par exemple de type EEPROM pour "*Electrically Erasable and Programmable Read-Only Memory*" ou de type Flash). La mémoire vive 32 et la mémoire non-volatile réinscriptible 34 sont chacune liées au premier processeur 12, par l'intermédiaire du bus de communication 60, de sorte que le premier processeur 12 du dispositif électronique 10 peut lire ou écrire des données dans chacune de ces mémoires.

La mémoire vive 32 et la mémoire non-volatile réinscriptible 34 sont chacune aussi liées à l'interface de sécurisation 25, également par l'intermédiaire du bus de communication 60, de sorte que l'élément sécurisé 15 peut lire ou écrire des données dans chacune de ces mémoires par l'intermédiaire de l'interface de sécurisation 25, du premier processeur 12 et du deuxième processeur 20.

La mémoire non-volatile réinscriptible 34 comprend ici une première portion de mémoire 37, une deuxième portion de mémoire 38 et une troisième portion de mémoire 39.

Le deuxième moyen de mémorisation mémorise une application primaire et une application secondaire. Les dénominations « application primaire » et « application secondaire » correspondent, par exemple, respectivement aux termes « *primary platform* » (pour « plateforme primaire ») et « *secondary platform bundle* » (pour « paquet de plateforme secondaire ») tels que définis dans la norme ETSI TS 103 465 (ETSI TS pour « *European Telecommunications Standards Institute* ») ou ETSI TS 103 666-2. Les dénominations « application primaire » et « application secondaire » correspondent aussi, par exemple, respectivement aux termes « *Virtual Primary Platform* ou VPP » (pour « plateforme virtuelle primaire ») et « *VPP Application* » (pour « application plateforme primaire virtuelle ») tels que définis dans le standard Global Platform « Virtual Primary Platform - Concepts and Interfaces ». Dans la suite du texte, le standard Global Platform « Virtual Primary Platform - Concepts and Interfaces » sera dit « standard GP » et les normes ETSI TS 103 465 ou ETSI TS 103 666-2 seront dites « normes ETSI ».

L'application primaire est par exemple mémorisée ici dans la deuxième portion de mémoire 38 de la mémoire non-volatile réinscriptible 34. L'application secondaire est, elle, par exemple mémorisée dans la troisième portion de mémoire 39 de la mémoire non-volatile réinscriptible 34.

L'application primaire (ou « VPP » selon le standard GP ou « primary plaform » selon les normes « ETSI » tels que décrits ci-dessus)) correspond à un système d'exploitation de bas niveau (ou LLOS pour « *Low Level Operating System* ») exploitant des ressources matérielles et/ou logicielles d'une plate-forme primaire (telle que définie dans les normes ETSI ou standard GP précédemment cités), selon un mode privilégié du deuxième processeur 20, permettant de mettre en oeuvre des services accessibles pour, par exemple, l'application secondaire, sur requête. Un service peut être, par exemple et de façon non limitative, une génération d'une donnée cryptographique, une comparaison de données ou la fourniture d'une référence de donnée.

L'application primaire inclut notamment un micronoyau, des ressources de bas niveau et un support de fonctions de sécurité. Ici l'application primaire joue le rôle d'un module matériel de sécurité conventionnel (ou HSM pour « *Hardware Security Module* »). En d'autres termes, et dans le contexte de la présente invention, l'application primaire correspond à un ensemble d'instructions participant à la mise en oeuvre du procédé conforme à la présente invention.

Dans cette description, on entend par « certificat », un certificat électronique utilisé pour l'identification ou l'authentification d'un utilisateur du dispositif électronique, pour l'identification ou l'authentification du dispositif électronique, pour l'identification ou l'authentification d'une application ou d'un système d'exploitation mémorisés ou exécutés dans au moins l'un parmi le terminal hôte 1, le dispositif électronique 10 ou l'élément sécurisé 15, pour la gestion des droits d'accès à un service par exemple d'un réseau ou d'un système mais également pour le chiffrement et/ou le déchiffrement des échanges. Ici, le certificat électronique contient au moins une clé cryptographique publique et/ou au moins une clé cryptographique privée.

Le certificat peut aussi contenir un identifiant (par exemple pour identifier le constructeur d'un composant, pour identifier une application ou le fournisseur d'un service) et/ou, par exemple, une date de validité. Les données du certificat sont signées par une entité signataire tierce ayant autorité pour garantir la confiance dans les données du certificat. Le certificat électronique possède donc des données et au moins une signature appliquée sur l'ensemble des données du certificat ou sur une représentation de l'ensemble des données du certificat (par exemple application de la signature sur un condensat ou un hachage des données du certificat). Plus généralement, le certificat électronique contient au moins une donnée ayant vocation à être partagée, la donnée concernée étant signée par une entité ou autorité de confiance signataire garantissant la confiance dans l'au moins une donnée partagée du certificat électronique.

L'application secondaire (ou « *VPP application* » selon le standard GP ou « secondary platform *bundle* » selon les normes ETSI) correspond à un ensemble d'éléments extérieurs à la première application. L'application secondaire peut utiliser certaines fonctions fournies par l'application primaire, par exemple en faisant appel à ces fonctions.

En pratique, l'application secondaire est une application de type particulier. Un système d'exploitation est associé à l'application secondaire (afin d'en permettre son exécution). Il peut s'agir d'une application de transport ou d'une application bancaire ou d'une application d'authentification dans un réseau de téléphonie mobile. De manière plus générale, l'application secondaire peut par exemple se rapporter aux télécommunications, au paiement, au transport, à l'identification ou à l'authentification. En d'autres termes, l'application secondaire est une application dédiée et mettant en oeuvre des services et/ou fonctionnalités liées par exemple, à un opérateur de télécommunications, à une banque, à un accès réseau, aux transports, à l'identification ou à l'authentification.

Une interface de programmation (ou API pour « *Application Programming Interface* ») permet de faire le lien entre l'application primaire et l'application secondaire. L'interface de programmation (non représentée) permet l'échange des données utiles entre l'application primaire et l'application secondaire.

Sur le plan fonctionnel, le dispositif électronique 10 muni de l'élément sécurisé 15 peut être vu comme un ensemble de modules (non représentés). Ces modules peuvent en pratique être réalisés par une combinaison d'éléments matériels et d'éléments logiciels. Chaque module possède une fonctionnalité décrite dans le procédé conforme à l'invention et exposé ci-après. Ainsi, pour chaque module, le dispositif électronique 10 mémorise par exemple des instructions de logiciel exécutables par le deuxième processeur 20 de l'élément sécurisé 15 afin d'utiliser un élément matériel (par exemple une interface de communication ou une mémoire) et de mettre ainsi en oeuvre la fonctionnalité offerte par le module.

La figure 2 représente un exemple de procédé mis en oeuvre dans l'élément sécurisé 15 du dispositif électronique 10 conformément à l'invention.

Ce procédé constitue un procédé de génération de certificat dans l'élément sécurisé 15 du dispositif électronique 10.

Préalablement à la mise en oeuvre du procédé conforme à l'invention, avant la personnalisation du dispositif électronique 10, un certificat source (couramment dénommé certificat de l'émetteur) est généré par exemple par une entité externe à partir d'un certificat racine (couramment dénommé certificat de l'autorité). Dans le cadre de la téléphonie mobile, cette entité externe est par exemple l'Association GSM (ou GSMA pour « *Global System for Mobile Communications* »).

L'entité externe délivre ce certificat source à une entité de personnalisation externe au dispositif électronique 10 et à l'élément sécurisé 15 (par exemple le certificat source est délivré à un serveur sécurisé, non représenté sur la figure 1). Lors de la phase de personnalisation du dispositif électronique 10, l'entité de personnalisation externe transfère le certificat source à l'élément sécurisé. L'élément sécurisé 15 mémorise alors le certificat source, par exemple mémorisé dans la première portion de mémoire 27 de la mémoire morte programmable 26.

L'application primaire est également installée dans l'élément sécurisé 15 du dispositif électronique 10 lors de la phase de personnalisation. Pour cela, l'entité de personnalisation délivre l'application primaire et la transfère à l'élément sécurisé du dispositif électronique 10, par exemple par l'intermédiaire d'un élément de chargement 29 mémorisé dans la mémoire morte 24 de l'élément sécurisé 15. L'élément de chargement 29 et l'entité de personnalisation ont par exemple préalablement établi un canal de communication sécurisé, via l'utilisation d'un jeu de clés cryptographiques (de chiffrement et/ou de déchiffrement) mémorisé dans une portion (non représentée sur la figure 1) de la mémoire morte 24 de l'élément sécurisé 15, pour transférer l'application primaire depuis l'entité de personnalisation vers l'élément sécurisé 15. Une fois le transfert de l'application primaire effectué, l'établissement du canal de communication sécurisé prend fin entre l'élément sécurisé 15 et l'entité de personnalisation externe.

Le deuxième processeur 20 transmet une requête de mémorisation de l'application primaire au premier processeur 12. Cette mémorisation comprend une première étape intermédiaire de chiffrement de l'application primaire par l'interface de sécurisation 25 et une deuxième étape intermédiaire de mémorisation de l'application primaire chiffrée, dans la mémoire vive 32, par l'interface de sécurisation 25.

Dans la première étape intermédiaire, l'interface de sécurisation 25 chiffre l'application primaire en utilisant une clé de chiffrement mémorisée dans la deuxième portion de mémoire 28 de la mémoire morte programmable 26.

Dans la deuxième étape intermédiaire, l'interface de sécurisation 25, une fois l'application primaire chiffrée, mémorise alors, dans la mémoire vive 32 du deuxième moyen de mémorisation 30, l'application primaire chiffrée.

Le premier processeur 12 commande ensuite la mémorisation de l'application primaire chiffrée (mémorisée dans la mémoire vive 32) dans la deuxième portion de mémoire 38 de la mémoire non-volatile réinscriptible 34 du deuxième moyen de mémorisation 30 du terminal hôte 1, suite à la réception de la requête de mémorisation de l'application primaire en provenance du premier processeur 12.

Lors de cette phase de personnalisation, préalablement à sa mémorisation dans la mémoire non-volatile réinscriptible 34 et/ou lors d'au moins une de ses exécutions, l'application primaire communique également avec l'entité de personnalisation externe afin de délivrer l'application secondaire dans l'élément sécurisé 15 du dispositif électronique 10. Dans un mode de réalisation particulier, l'entité de personnalisation avec laquelle l'application primaire communique est une deuxième entité de personnalisation distincte de l'entité de personnalisation ayant été utilisée pour le certificat source. L'application secondaire est reçue non chiffrée par l'élément sécurisé 15, en provenance de l'entité de personnalisation, par l'intermédiaire d'un canal de communication sécurisé préalablement établi entre l'application primaire et l'entité de personnalisation.

Le deuxième processeur 20 transmet une requête de mémorisation de l'application secondaire au premier processeur 12. Cette mémorisation comprend une première étape intermédiaire de chiffrement de l'application secondaire par l'interface de sécurisation 25 et une deuxième étape intermédiaire de mémorisation de l'application secondaire chiffrée, dans la mémoire vive 32, par l'interface de sécurisation 25.

Lors de la première étape intermédiaire, l'interface de sécurisation 25 chiffre l'application secondaire en utilisant la clé de chiffrement mémorisée dans la deuxième portion de mémoire 28 de la mémoire morte programmable 26. L'interface de sécurisation 25 mémorise alors, lors de la deuxième étape intermédiaire, dans la mémoire vive 32, l'application secondaire chiffrée.

Puis, de manière similaire à l'application primaire, le premier processeur 12 commande la mémorisation de l'application secondaire chiffrée (mémorisée dans la mémoire vive 32) dans la troisième portion de mémoire 39 de la mémoire non-volatile réinscriptible 34 du deuxième moyen de mémorisation 30 du terminal hôte 1, suite à la réception de la requête de mémorisation de l'application secondaire en provenance du premier processeur 12.

Comme le montre la figure 2, le procédé débute à l'étape E2 avec une étape de mémorisation du certificat source, dans l'élément sécurisé 15, par le premier moyen de mémorisation. Plus précisément, le certificat source est mémorisé dans la mémoire morte programmable 26 de l'élément sécurisé 15.

La mémorisation du certificat source est par exemple effectuée en usine lors de la personnalisation de l'élément sécurisé 15. On peut prévoir dans ce cadre qu'une entité de personnalisation externe distribue (selon une technique de diffusion ou « broadcast » selon l'appellation d'origine anglo-saxonne) le certificat source à une pluralité d'éléments sécurisés, y compris l'élément sécurisé 15. En particulier, ce certificat source est par exemple mémorisé dans la première portion 27 de la mémoire morte programmable 26. Le certificat source comprend notamment une clé privée K₁ et une clé publique associée K₂ (qui sont donc également mémorisées dans la première portion 27 de la mémoire morte programmable 26). Le certificat source peut aussi contenir, par exemple, un identifiant associé à une application (par exemple un identifiant associé à l'application primaire et/ou un identifiant associé à l'application secondaire).

Comme le montre la figure 2, le procédé se poursuit à l'étape E4 correspondant à une étape d'exécution de l'application primaire. Pour cela, l'application primaire est chargée dans l'élément sécurisé 15, par l'intermédiaire par exemple de l'élément de chargement 29 mémorisé dans la mémoire morte 24 de l'élément sécurisé 15, afin d'être mémorisée dans la mémoire vive 22 de l'élément sécurisé 15.

Lors de cette étape, et afin de pouvoir être exécutée, le deuxième processeur 20 de l'élément sécurisé 15 commande la lecture de l'application primaire dans la deuxième portion 38 de la mémoire non-volatile réinscriptible 34. Cette étape de lecture comprend notamment les étapes suivantes :
- une étape d'envoi d'une commande de chargement, par le deuxième processeur 20 à destination du premier processeur 12, afin de charger l'application primaire, mémorisée dans la deuxième portion 38 de la mémoire non-volatile réinscriptible 34, dans la mémoire vive 32,
   - une étape d'envoi d'une commande de lecture, par le deuxième processeur 20 à destination de l'interface de sécurisation 25, afin de lire (au sens de récupérer) dans la mémoire vive 32 l'application primaire,
   - une étape de déchiffrement de l'application primaire par l'interface de sécurisation 25 au moyen d'une clé de déchiffrement mémorisée dans la mémoire morte programmable 26, et
   - une étape de mémorisation de l'application primaire déchiffrée dans la mémoire vive 22 de l'élément sécurisé 15.

A l'étape E6, le deuxième processeur 20 de l'élément sécurisé 15 envoie une requête de chargement dans la mémoire vive 32 de l'application secondaire mémorisée dans la troisième portion de mémoire 39 de la mémoire non-volatile réinscriptible 34, à destination du premier processeur 12. Le premier processeur 12 commande alors le chargement, dans la mémoire vive 32, de l'application secondaire chiffrée mémorisée dans la troisième portion de mémoire 39 de la mémoire non-volatile 34. Le deuxième processeur 20 envoie alors une commande de lecture à destination de l'interface de sécurisation 25, afin de commander la lecture (au sens de récupération) dans la mémoire vive 32, par l'interface de sécurisation 25, de l'application secondaire chiffrée.

L'interface de sécurisation 25 déchiffre alors ensuite l'application secondaire récupérée au moyen d'une clé de déchiffrement mémorisée dans la mémoire morte programmable 26. L'application secondaire déchiffrée est ensuite mémorisée dans la mémoire vive 22 de l'élément sécurisé 15.

Pour effectuer des opérations de déchiffrement ou de chiffrement, l'interface de sécurisation 25 utilise des registres mémoire dédiés. Typiquement l'interface de sécurisation 25 utilise un premier registre, dit registre d'entrée ou dit premier registre de l'interface de sécurisation 25, qui est destiné à mémoriser les données à déchiffrer ou à chiffrer selon le cas d'utilisation, un deuxième registre, dit deuxième registre de l'interface de sécurisation 25, qui est destiné à mémoriser la clé de déchiffrement ou de chiffrement utilisée pour l'opération de déchiffrement ou de chiffrement (la clé de déchiffrement et la clé de chiffrement sont identiques ou différentes selon les modes de réalisation) et un troisième registre, dit registre de sortie ou dit troisième registre de l'interface de sécurisation 25, qui est destiné à mémoriser le résultat de l'opération effectuée (données déchiffrées ou données chiffrées) sur les données reçues dans le registre d'entrée.

Dans un mode de réalisation ledit premier registre de l'interface de sécurisation 25, ledit deuxième registre de l'interface de sécurisation 25 et ledit troisième registre de l'interface de sécurisation 25 sont un seul et même registre.

En variante, l'interface de sécurisation 25 peut mémoriser l'application secondaire délivrée vers la mémoire vive 22 de l'élément sécurisé 15 sans la déchiffrer. Le deuxième processeur 20 de l'élément sécurisé 15 déchiffre alors l'application secondaire au moyen d'une clé de déchiffrement mémorisée dans la mémoire morte programmable 26. Le deuxième processeur 20 commande alors ensuite la mémorisation de l'application secondaire déchiffrée dans la mémoire vive 22 de l'élément sécurisé 15.

Comme le montre la figure 2, le procédé se poursuit ensuite à l'étape E8. Lors de cette étape, l'application secondaire (du fait de son exécution par le deuxième processeur 20) émet une requête de génération d'un certificat dérivé. Cette requête est envoyée à l'application primaire.

La réception de cette requête par l'application primaire (suite à son exécution par le deuxième processeur 20) entraîne alors la génération du certificat dérivé (étape E10). Le certificat dérivé n'est généré que sur requête de l'application secondaire, il est donc spécifique à l'application secondaire. Ce certificat dérivé comprend une clé privée K'₁ et une clé publique K'₂.

Le certificat dérivé est constitué d'au moins une partie donnée et d'au moins une partie signature. La partie donnée comprend donc au moins une clé privée K'₁ et au moins une clé publique K'₂, générées par la mise en oeuvre d'un algorithme de cryptographie, par exemple, de type RSA (pour « *Rivest Shamir Adleman* » du nom des inventeurs de l'algorithme cryptographique RSA) ou de type ECC (pour « *Elliptic Curve Cryptography* »). D'autres données de types différents, par exemple et de façon non limitative, un identifiant de constructeur d'un composant électronique, une durée de validité, un numéro de série du certificat, l'algorithme de chiffrement utilisé pour signé le certificat, des informations liées à l'autorité de certification émettrice, l'objet de l'utilisation de la clé publique, une version du standard de normalisation des certificats, une adresse internet, un nom de domaine internet ou bien encore par exemple, un identifiant associé à une application, peuvent aussi être produites (par exemple, par une lecture d'une valeur dans un fichier, par génération d'une valeur via une fonction d'une application) et donc composer aussi la partie donnée du certificat électronique. Dans un exemple de réalisation, tout ou partie des données (constituant la partie donnée) du certificat sont chiffrées (par exemple par la clé privée K'₁ pour en garantir son secret). Les données générées du certificat dérivé sont mémorisées dans la mémoire vive 22.

Le procédé se poursuit ensuite à l'étape E12. Lors de cette étape, l'application primaire applique aux données du certificat dérivé un algorithme cryptographique de signature électronique (par exemple mis en oeuvre par un algorithme cryptographique de type RSA ou ECC). Cet algorithme de signature électronique utilise la clé privée K₁ issue du certificat source (et mémorisée dans la première portion de mémoire 27 de la mémoire morte programmable 26). Cet algorithme utilise également un identifiant unique associé à l'application secondaire (cet identifiant unique est également mémorisé dans la première portion de mémoire 27 de la mémoire morte programmable 26). En d'autres termes, à l'issue de l'étape E12, les données du certificat dérivé ont été signées électroniquement par l'application primaire au moyen de la clé privée K₁ contenue dans le certificat source et le certificat dérivé généré comporte les données et leur signature associée. Le certificat dérivé, constitué des données et de la signature des données, est mémorisé en mémoire vive 22.

En pratique, l'application primaire, exécutée par le deuxième processeur 20, commande la lecture du certificat source mémorisé dans la mémoire morte programmable 26. L'application primaire envoie donc, au deuxième processeur 20, une requête de chargement du certificat source dans la mémoire vive 22. Le deuxième processeur 20 charge alors en mémoire vive 22 le certificat source en provenance de la mémoire morte programmable 26. L'application primaire lit ensuite, dans la mémoire vive 22, la clé privée K₁ issue du certificat source permettant de signer les données du certificat dérivé.

L'application primaire envoie ensuite une autre requête à l'application secondaire (étape E14) pour indiquer que le certificat dérivé a été généré et pour commander la mémorisation de ce certificat dérivé.

L'application secondaire transmet alors, au deuxième processeur 20, une requête de mémorisation du certificat dérivé dans la mémoire non-volatile réinscriptible 34 du deuxième moyen de mémorisation 30 (étape E16).

En pratique, le deuxième processeur 20 transmet une requête de mémorisation, dans la mémoire non-volatile réinscriptible 34, du certificat dérivé, mémorisé dans la mémoire vive 22, à destination du premier processeur 12. Cette mémorisation comprend une étape intermédiaire de chiffrement du certificat dérivé par l'interface de sécurisation 25. Cette étape de chiffrement comprend une étape d'envoi, par le deuxième processeur 20 à l'interface de sécurisation 25, d'une commande de chiffrement du certificat dérivé. L'interface de sécurisation 25 récupère alors le certificat dérivé mémorisé en mémoire vive 22 (au sens d'une lecture), et chiffre le certificat dérivé en utilisant la clé de chiffrement mémorisée dans la mémoire morte programmable 26 (la clé de chiffrement est préalablement mise à disposition de l'interface de mémorisation 25, par exemple, par une copie de cette clé de chiffrement, par le deuxième processeur 20 dans un registre de l'interface de sécurisation 25, par exemple ici, dans ledit deuxième registre de l'interface de sécurisation 25). L'interface de sécurisation 25 charge alors le certificat dérivé chiffré dans la mémoire vive 32.

Le premier processeur 12 du dispositif électronique 10 commande ensuite la mémorisation du certificat dérivé chiffré (mémorisé dans la mémoire vive 32) dans la première portion de mémoire 37 de la mémoire non-volatile réinscriptible 34 (étape E18), suite à la réception de la requête de mémorisation du certificat dérivé, en provenance du premier processeur 12.

En variante, cette commande de mémorisation peut être effectuée par le premier processeur 12 du dispositif électronique 10.

A l'étape E20, sur requête du premier processeur 12, le deuxième processeur 20 exécute l'application secondaire (via son système d'exploitation propre) afin de mettre en oeuvre une fonctionnalité souhaitée, par exemple dans le cadre d'une authentification auprès d'un réseau de téléphonie d'un opérateur de télécommunications.

En pratique, afin par exemple d'être utilisée dans le cadre d'un réseau de téléphonie, l'application secondaire va devoir être authentifiée par une entité externe du réseau (externe au terminal hôte 1 comprenant le dispositif électronique 10 et l'élément sécurisé 15). Une authentification défi-réponse (ou « *Challenge-response authentication* » selon l'appellation d'origine anglo-saxonne) est par exemple mise en place.

Pour cela, sur requête du premier processeur 12, le deuxième processeur 20 génère une signature authentifiant l'application secondaire basée sur un nombre aléatoire (reçu par exemple par l'entité externe) et sur la clé privée K'₁ du certificat dérivé. La signature associée à l'application secondaire est ensuite vérifiée par l'entité externe du réseau en s'appuyant sur la clé publique K'₂ du certificat dérivé. Dans ce cadre, l'entité externe peut vérifier la validité de la clé publique K'₂ au moyen du certificat source (que l'entité externe mémorise également). Plus précisément, l'entité externe vérifie la validité de la clé publique K'₂ du certificat dérivé au moyen de la clé publique K₂ du certificat source (par vérification de la signature produite à l'étape E12). Pour plus de détails, on pourra se référer au document « *RSP Technical Spécification* », GSM Association, version 2.2.1, 18 décembre 2018.

Au besoin, l'application secondaire peut commander une lecture du certificat dérivé chiffré, mémorisé dans la première portion de mémoire 37 de la mémoire non-volatile réinscriptible 34, afin d'utiliser les données du certificat dérivé (par exemple la clé privée K'₁). Cette étape de lecture comprend l'envoi, par l'application secondaire, d'une commande de lecture du certificat dérivé, au deuxième processeur 20.

Le deuxième processeur 20 envoie ensuite une commande de chargement, dans la mémoire vive 32, du certificat dérivé mémorisé en mémoire non-volatile réinscriptible 34, au premier processeur 12. Le deuxième processeur 20, une fois le certificat dérivé mémorisé dans la mémoire vive 32 (par exemple via une notification du premier processeur 12), envoie une commande de lecture à l'interface de sécurisation 25, afin de lire (au sens de récupérer) dans la mémoire vive 32, le certificat dérivé chiffré.

L'interface de sécurisation 25 déchiffre alors le certificat dérivé au moyen d'une clé de déchiffrement mémorisée dans la mémoire morte programmable 26 et mémorise alors le certificat dérivé déchiffré dans la mémoire vive 22. L'application secondaire peut alors accéder aux données (par exemple la clé privée K'₁) du certificat dérivé (suite, par exemple à la réception d'une notification de disponibilité, envoyée par le deuxième processeur 20) pour une utilisation dans le cadre de la mise en oeuvre d'une fonctionnalité (par exemple dans le cadre d'une authentification de l'application secondaire auprès d'un réseau de téléphonie d'un opérateur de télécommunications).

Une fois que l'authentification réussie, l'entité externe du réseau autorise la mise en oeuvre d'une fonctionnalité. Pour cela, l'entité externe délivre un jeu de clés à l'application secondaire. Ce jeu de clés est utilisé ensuite pour le chiffrement/déchiffrement de requêtes échangées pour la mise en oeuvre d'une fonctionnalité de téléphonie (ou « *Remote SIM Provisioning* »).

En variante, le dispositif électronique peut comprendre plusieurs applications secondaires différentes (chacune par exemple associée à une fonctionnalité particulière). Dans ce cas, sur requête de chaque application secondaire, l'application primaire génère plusieurs certificats dérivés, chacun associé à une application secondaire. Chacun des certificats dérivés est généré à partir du même certificat source. En particulier, chaque certificat dérivé est signé électroniquement à partir de la clé privée K₁ (unique) contenue dans le certificat source. En pratique, l'interface de programmation permet les échanges spécifiques entre chaque application secondaire et l'application primaire. En particulier, chaque certificat dérivé est transmis uniquement à l'application secondaire concernée.

En variante encore, plusieurs certificats sources peuvent être utilisés pour la génération des certificats dérivés.

## Revendications

1. Elément sécurisé (15) comprenant un premier moyen de mémorisation (22, 24, 26) d'un premier certificat associé à une application primaire et un processeur (20),
**caractérisé en ce que** l'application primaire est conçue de sorte que le processeur (20) génère un second certificat associé à une application secondaire lorsque l'application primaire est exécutée par le processeur (20), le second certificat étant signé électroniquement au moyen d'une clé contenue dans le premier certificat.

2. Elément sécurisé (15) selon la revendication 1, dans lequel l'application primaire est conçue pour recevoir une requête de l'application secondaire, le second certificat étant généré sur la base de la réception de ladite requête.

3. Elément sécurisé (15) selon la revendication 1 ou 2, dans lequel le premier certificat est mémorisé dans une première partie de mémoire (27).

4. Elément sécurisé (15) selon la revendication 3, dans lequel, le premier moyen de mémorisation comprend au moins une première mémoire physique (26), la première partie de mémoire (27) correspondant à une portion de la première mémoire physique (26).

5. Elément sécurisé (15) selon la revendication 3 ou 4, dans lequel l'application primaire est conçue de sorte que le processeur (20) commande la mémorisation du second certificat dans une deuxième partie de mémoire (37) lorsque l'application primaire est exécutée par le processeur (20), la deuxième partie de mémoire (37) étant distincte de la première partie de mémoire (27).

6. Elément sécurisé (15) selon la revendication 5, dans lequel l'application secondaire est conçue pour recevoir une autre requête de l'application primaire, la réception de cette autre requête commandant la mémorisation du second certificat.

7. Elément sécurisé (15) selon la revendication 5 ou 6, dans lequel il est prévu un deuxième moyen de mémorisation (30) de l'application primaire et de l'application secondaire, ledit deuxième moyen de mémorisation (30) comprenant au moins une deuxième mémoire physique (34), la deuxième partie de mémoire (37) étant une portion de la deuxième mémoire physique (34).

8. Elément sécurisé (15) selon la revendication 7, dans lequel le deuxième moyen de mémorisation est positionné en dehors de l'élément sécurisé (15).

9. Elément sécurisé (15) selon l'une quelconque des revendications 3 à 8, dans lequel la première partie de mémoire (27) est une partie d'une mémoire programmable une seule fois.

10. Elément sécurisé (15) selon l'une quelconque des revendications 1 à 9, dans lequel l'application primaire est conçue de sorte que le processeur (20) applique, au second certificat, un algorithme cryptographique de signature électronique utilisant la clé contenue dans le premier certificat.

11. Elément sécurisé (15) selon l'une quelconque des revendications 1 à 10, dans lequel l'application secondaire est une application d'authentification dans un réseau de téléphonie mobile.

12. Terminal hôte (1) comprenant un dispositif électronique (10) muni d'un élément sécurisé (15) selon l'une quelconque des revendications 1 à 11, ledit terminal hôte comprenant le deuxième moyen de mémorisation (30) de l'application primaire et de l'application secondaire, ledit deuxième moyen de mémorisation (30) étant relié audit élément sécurisé (15).

13. Procédé de génération de certificat dans un élément sécurisé (15), ledit élément sécurisé (15) comprenant un premier moyen de mémorisation d'un premier certificat associé à une application primaire et un processeur (20), le procédé comprenant une étape (E10) de génération par le processeur d'un second certificat associé à une application secondaire lorsque l'application primaire est exécutée par le processeur (20), le second certificat étant signé électroniquement au moyen d'une clé contenue dans le premier certificat.

14. Procédé de génération selon la revendication 13, comprenant une étape (E8) de réception par l'application primaire d'une requête de l'application secondaire, ladite étape (E10) de génération du second certificat étant basée sur la réception de ladite requête.

15. Procédé selon la revendication 13 ou 14, dans lequel le premier moyen de mémorisation comprend au moins une première partie de mémoire (27) et dans lequel il est prévu un deuxième moyen de mémorisation comprenant une deuxième partie de mémoire (37), la première partie de mémoire (27) mémorisant le premier certificat et le procédé comprenant une étape (E18) de mémorisation du second certificat dans la deuxième partie de mémoire (37).

16. Procédé selon la revendication 15, dans lequel le premier moyen de mémorisation comprend au moins une première mémoire physique (26) et le deuxième moyen de mémorisation comprend une deuxième mémoire physique (34), la première partie de mémoire (27) correspondant à une portion de la première mémoire physique (26) et la deuxième partie de mémoire (37) correspondant à une portion de la deuxième mémoire physique (34).

17. Procédé selon l'une quelconque des revendications 13 à 16, dans lequel l'étape (E10) de génération comprend une étape (E12) d'application, au second certificat, d'un algorithme cryptographique de signature électronique utilisant la clé contenue dans le premier certificat.

18. Programme d'ordinateur comprenant des instructions exécutables par un processeur (20) conçues pour mettre en oeuvre un procédé de génération de certificat selon l'une des revendications 13 à 17 lorsque ces instructions sont exécutées par le processeur (20).
